# FASCICULE DE BREVET EUROPEEN

(11) **EP 0 990 383 B1**
(45) Date de publication et mention de la délivrance du brevet: **06.08.2003**
(21) Numéro de dépôt: 99440263.4
(22) Date de dépôt: 01.10.1999
(51) Int. Cl.: A01D 69/00

(54) **Machine agricole de récolte**
Landwirtschaftliche Erntemaschine
Agricultural machine

(30) Priorité: 02.10.1998 FR 9812523
(43) Date de publication de la demande: 05.04.2000
(73) Titulaire: KUHN S.A., 67706 Saverne Cedex (FR)
(72) Inventeur: Walch, Martin, 67490 Dettwiller (FR)

(56) Documents cités:
- EP-A- 0 277 343
- EP-A- 0 406 961
- EP-A- 0 823 199
- WO-A-93/20680
- DE-U- 9 414 597
- FR-A- 2 760 934
- US-A- 2 615 294

## Description

La présente invention concerne une machine agricole de récolte comportant :
- un châssis s'étendant, durant le travail, transversalement à la direction d'avance ;
- un mécanisme de récolte qui est suspendu de manière déplaçable dans le châssis au moyen d'un dispositif de suspension ;
- un timon lié au châssis au moyen d'une première articulation d'axe géométrique au moins sensiblement vertical, ledit timon étant destiné à lier la machine de récolte à un véhicule tracteur ;
- des organes de transmission destinés à transmettre le mouvement d'une source motrice jusqu'au mécanisme de récolte et comprenant notamment :
   * un premier tronçon supporté par le timon et comprenant au moins un premier arbre d'entraînement ;
   * un deuxième tronçon supporté par le châssis et comprenant au moins un arbre d'entrée dont l'axe de rotation est, durant le travail, au moins sensiblement dirigé suivant la direction d'avance ;
   * un accouplement comportant un joint universel au moyen duquel il est lié au premier arbre d'entraînement et un autre joint universel au moyen duquel il est lié à l'arbre d'entrée.

Il est connu dans l'état de la technique un document **EP 0 823 199 A2** qui décrit une telle machine agricole de récolte comportant dans les grandes lignes un châssis, un mécanisme de récolte, un timon et des organes de transmission.

Le timon est d'une part lié au châssis au moyen d'une première articulation d'axe géométrique au moins sensiblement vertical et d'autre part destiné à être lié à un véhicule tracteur.

Les organes de transmission sont, quant à eux, destinés à transmettre le mouvement d'une source motrice jusqu'au mécanisme de récolte et comprennent :
* un premier tronçon supporté par le timon et comprenant un premier arbre d'entraînement ;
* un deuxième tronçon supporté par le châssis et comprenant un arbre d'entrée dont l'axe de rotation est, durant le travail, sensiblement dirigé suivant la direction d'avance ; et
* un accouplement comportant un premier joint universel au moyen duquel il est lié au premier arbre d'entraînement, et un deuxième joint universel au moyen duquel il est lié à l'arbre d'entrée.

Pour pouvoir travailler alternativement de part et d'autre de la voie du véhicule tracteur avec cette machine agricole de récolte connue, le châssis peut être pivoté, par rapport au timon, dans au moins deux positions de travail autour de la première articulation. A cet effet, pour assurer une bonne transmission du mouvement et permettre au premier joint universel et au deuxième joint universel de l'accouplement de travailler dans de bonnes conditions, le timon comporte, au niveau de la première articulation, une chape entre les ailes de laquelle s'étend l'accouplement.

Une telle réalisation présente cependant un certain nombre d'inconvénients.

En effet, le timon est principalement composé d'un ensemble mécano-soudé d'une grande longueur. Pour assurer une bonne réalisation de la chape et éviter les déformations dues aux soudures, celle-ci doit donc être usinée après soudage dudit timon. Ceci est une opération complexe à réaliser du fait de la taille dudit timon. Elle nécessite de grands moyens de mise en oeuvre, ce qui se traduit donc par un coût de réalisation très élevé.

En sus, pour assurer une bonne résistance mécanique de ce montage en chape, il est nécessaire d'utiliser des éléments de grandes taillés, ce qui a pour effet d'augmenter encore davantage le coût de réalisation.

Le but de la présente invention est de remédier à ces inconvénients sus-cités, tout en assurant un bon fonctionnement de la machine agricole de récolte en question.

A cet effet, la machine agricole de récolte selon l'invention est caractérisée en ce que
- l'axe de rotation de l'arbre d'entrée est décalé par rapport à l'axe géométrique de la première articulation liant le timon au châssis ;
- le premier arbre d'entraînement ou l'accouplement sont guidés en rotation dans un organe porteur lié au châssis au moyen d'une autre articulation d'axe géométrique au moins sensiblement vertical et coupant au moins sensiblement l'axe de rotation de l'arbre d'entrée ;
- un organe de pilotage est lié entre l'organe porteur et le timon.

L'invention concerne également les caractéristiques suivantes considérées isolément ou dans toutes leurs combinaisons techniquement possibles :
- le joint universel et l'autre joint universel de l'accouplement peuvent comporter une double mâchoire rigide ;
- la liaison entre le joint universel et le premier arbre d'entraînement peut être une liaison coulissante suivant l'axe de rotation de ce dernier ;
- la liaison entre l'autre joint universel et l'arbre d'entrée peut être une liaison coulissante suivant l'axe de rotation de ce dernier ;
- une mâchoire correspondante du joint universel peut être fixe par rapport au premier arbre d'entraînement et le premier arbre d'entraînement peut être réalisé sous forme d'un arbre télescopique ;
- une mâchoire correspondante du joint universel peut être fixe par rapport au premier arbre d'entraînement et une mâchoire correspondante de l'autre joint universel peut également être fixe par rapport à l'arbre d'entrée, le joint universel et l'autre joint universel étant alors télescopiques l'un par rapport à l'autre suivant un axe géométrique passant par les centres des deux joints universels ;
- le premier arbre d'entraînement ou une mâchoire correspondante du joint universel peuvent être guidés en rotation dans l'organe porteur, l'axe géométrique de l'autre articulation liant l'organe porteur au châssis coupant alors l'axe géométrique passant par les centres des deux joints universels au moins sensiblement à mi-distance entre lesdits centres lorsque le timon se trouve dans une position au moins sensiblement orthogonale par rapport au châssis ;
- la partie de l'accouplement située entre les deux joints universels peut être guidée en rotation dans l'organe porteur, l'axe géométrique de l'autre articulation liant l'organe porteur au châssis passant alors au moins sensiblement par le centre de l'autre joint universel ;
- l'axe géométrique de la première articulation et l'axe géométrique de l'autre articulation peuvent s'étendre au moins sensiblement dans un plan vertical s'étendant au moins sensiblement orthogonalement à la direction d'avance au travail ;
- l'organe de pilotage peut former un quadrilatère déformable avec le timon, le châssis et l'organe porteur ;
- ce quadrilatère peut être au moins sensiblement un parallélogramme ;
- l'organe de pilotage peut être constitué d'un tirant articulé entre le timon et l'organe porteur ;
- en vue latérale, l'axe géométrique de l'autre articulation, considéré de bas en haut, peut être légèrement incliné vers l'avant ;
- en vue latérale, l'axe géométrique de la première articulation, considéré de bas en haut, peut être légèrement incliné vers l'arrière ;
- le premier tronçon d'organes de transmission peut comporter un deuxième arbre d'entraînement qui transmet le mouvement depuis l'avant du timon jusqu'au premier arbre d'entraînement, le premier arbre d'entraînement et le deuxième arbre d'entraînement étant alors accouplés l'un à l'autre au moyen d'un deuxième accouplement ;
- ce deuxième accouplement peut être constitué d'un joint universel ;
- le premier arbre d'entraînement et le deuxième arbre d'entraînement peuvent être supportés directement par le timon au moyen d'un seul palier s'étendant dans le voisinage du deuxième accouplement ;
- ce palier peut être lié au timon au moyen de supports élastiques ;
- ce palier peut, en outre, être monté sur le deuxième arbre d'entraînement ;
- l'axe de rotation du deuxième arbre d'entraînement peut être au moins sensiblement confondu avec l'axe longitudinal du timon ;
- l'accouplement peut s'étendre hors du timon et le premier arbre d'entraînement peut émerger du timon, une protection étant alors prévue qui enveloppe au moins sensiblement l'accouplement et la partie du premier arbre d'entraînement qui émerge du timon ;
- le timon peut être pivoté dans une position de transport dans laquelle il s'étend au moins sensiblement parallèlement au châssis, l'axe de rotation de l'arbre d'entrée s'étendant alors, par rapport à la première articulation, du côté opposé à celui où s'étend le timon en position de transport.

D'autres objets et caractéristiques de l'invention ressortiront de la description ci-après avec référence aux dessins annexés qui représentent, à titre d'exemples non limitatifs, des formes de réalisation de la machine agricole de récolte selon l'invention.

Sur ces dessins :
- la **figure 1** représente une vue de dessus, partiellement en coupe, d'une machine agricole de récolte selon l'invention dans une position de transport ;
- la **figure 2** représente une vue latérale, partiellement en coupe, de la machine agricole de récolte de la figure 1 ;
- la **figure 3** représente, à une autre échelle, une vue en coupe suivant le plan III-III défini sur la figure 1 ;
- la **figure 4** représente, à une autre échelle, une partie de la machine agricole de récolte de la figure 1 ;
- la **figure 5** représente les mêmes éléments que ceux de la figure 4, mais dans une position de travail à droite ;
- la **figure 6** représente les mêmes éléments que ceux de la figure 4, mais dans une position de travail à gauche ;
- la **figure 7** représente une vue de dessus, partiellement en coupe, de la machine agricole de récolte dans une autre position de transport ;
- la **figure 8** représente, à une autre échelle, une partie d'une machine agricole de récolte selon une deuxième forme de réalisation ;
- la **figure 9** représente de manière schématique une partie d'une machine agricole de récolte selon une troisième forme de réalisation.

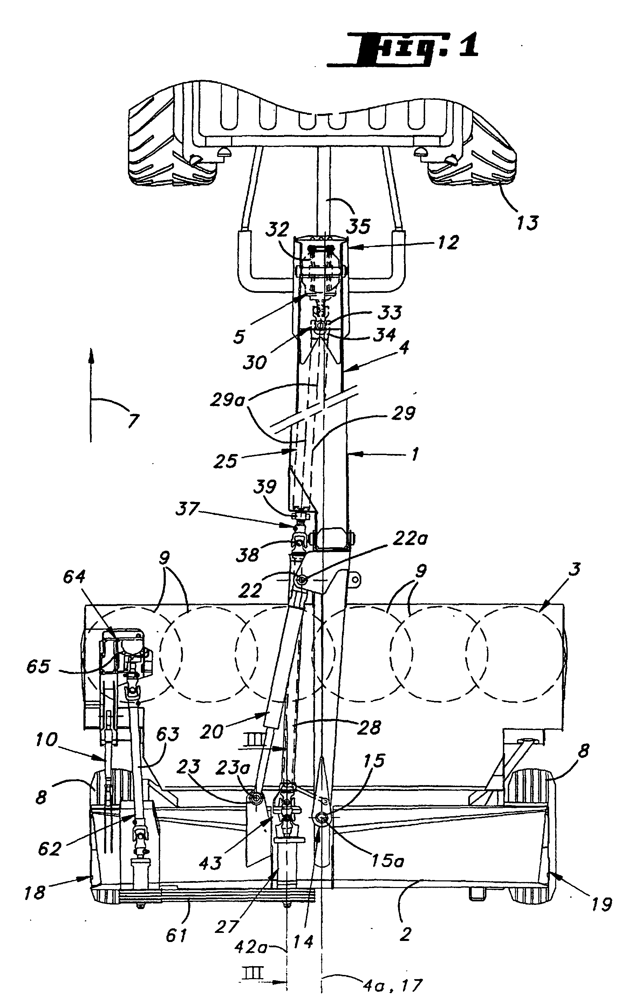

Sur les figures 1 à 6, on voit une machine agricole de récolte qui est, selon l'exemple de réalisation représenté, une faucheuse (1).

Cette faucheuse (1) comporte, dans les grandes lignes, un châssis (2), un mécanisme de récolte (3), un timon (4) et des organes de transmission (5).

Le châssis (2) s'étend, notamment en position de travail, transversalement à la direction d'avance (7) et comporte, selon l'exemple de réalisation représenté, deux roues (8) au moyen desquelles il peut être déplacé.

Dans la suite de la description, les notions suivantes "avant", "arrière", "devant" et "derrière" sont définies par rapport au sens d'avance (7) indiqué par la flèche de la direction d'avance (7), et les notions "droite" et "gauche" sont définies en regardant la faucheuse (1), de l'arrière, dans le sens d'avance (7).

Le mécanisme de récolte (3) comporte des organes de coupe (9) lesquels sont destinés à couper la récolte sur pied, et est suspendu de manière déplaçable dans le châssis (2) au moyen d'un dispositif de suspension (10).

Le timon (4) est, quant à lui, lié d'une part à son extrémité avant (12) à un véhicule tracteur (13) d'une manière connue par l'homme du métier, et d'autre part à son extrémité arrière (14) au châssis (2) au moyen d'une première articulation (15) d'axe géométrique (15a) au moins sensiblement vertical et situé au moins sensiblement dans un plan médian (17) parallèle à la direction d'avance (7) et s'étendant sensiblement à mi-distance entre les extrémités latérales (18, 19) dudit châssis (2). En vue latérale et considéré de bas en haut, l'axe géométrique (15a) de cette première articulation (15) pourra être légèrement incliné vers l'arrière.

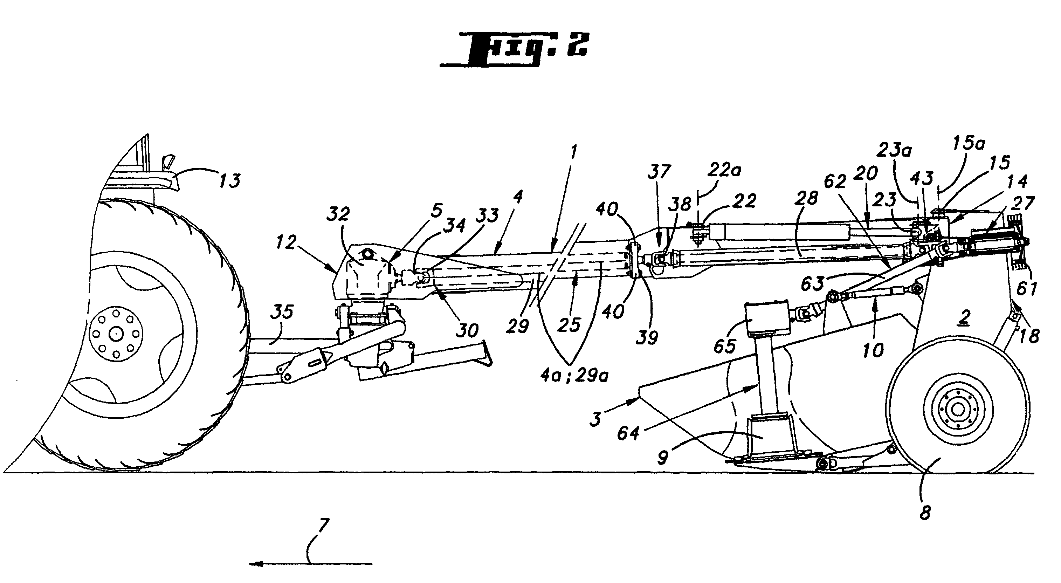

Sur les figures 1 et 2, on voit en sus qu'il est prévu un élément de manoeuvre (20) constitué, selon l'exemple de réalisation représenté, d'un vérin.

Cet élément de manoeuvre (20) est destiné à faire pivoter le châssis (2) avec le mécanisme de récolte (3) autour de l'axe géométrique (15a) de la première articulation (15), de manière à amener la faucheuse (1) de la position de transport dans une position de travail à droite ou à gauche dans laquelle ledit châssis (2) et ledit mécanisme de récolte (3) s'étendent à droite ou à gauche de la voie du véhicule tracteur (13). A cet effet, l'élément de manoeuvre (20) est lié d'une part au timon (4) au moyen d'une deuxième articulation (22) d'axe géométrique (22a) sensiblement parallèle à l'axe géométrique (15a) de la première articulation (15) et d'autre part au châssis (2) au moyen d'une troisième articulation (23) d'axe géométrique (23a) également sensiblement parallèle audit axe géométrique (15a).

Les organes de transmission (5) sont, quant à eux, destinés à transmettre le mouvement d'une source motrice qui est, selon l'exemple de réalisation représenté, constituée par le véhicule tracteur (13), jusqu'au mécanisme de récolte (3).

A cet effet, les organes de transmission (5) comportent notamment un premier tronçon (25) supporté par le timon (4) et un deuxième tronçon (27) supporté par le châssis (2).

Le premier tronçon (25) comporte, selon l'exemple de réalisation représenté, un premier arbre d'entraînement (28) et un deuxième arbre d'entraînement (29). Le deuxième arbre d'entraînement (29) est accouplé, à son extrémité avant (30), à un premier boîtier de transmission (32) au moyen d'un premier accouplement (33) constitué d'un premier joint universel (34). Ce boîtier de transmission (32) est situé à l'extrémité avant (12) du timon (4) et est accouplé au véhicule tracteur (13) au moyen d'un premier arbre de transmission à joints universels (35). Le deuxième arbre d'entraînement (29) transmet le mouvement depuis l'avant du timon (4) jusqu'au premier arbre d'entraînement (28). A cet effet, le premier arbre d'entraînement (28) et le deuxième arbre d'entraînement (29) sont accouplés l'un à l'autre au moyen d'un deuxième accouplement (37) constitué d'un deuxième joint universel (38). Sur les figures 1 et 2, on voit, en outre, que le premier arbre d'entraînement (28) et le deuxième arbre d'entraînement (29) sont supportés par le timon (4) au moyen d'un seul palier (39) s'étendant dans le voisinage du deuxième accouplement (37). Ce palier (39) est lié au timon (4) au moyen de supports élastiques (40) permettant de filtrer les vibrations lors du travail, de faciliter le montage des arbres d'entraînement (28, 29) et d'absorber les déformations dudit timon (4) lors du travail. Plus précisément, on voit encore que le palier (39) est monté sur le deuxième arbre d'entraînement (29) et que l'axe de rotation (29a) de ce dernier est au moins sensiblement confondu avec l'axe longitudinal (4a) du timon (4).

Le deuxième tronçon (27) comporte, quant à lui, un arbre d'entrée (42) dont l'axe de rotation (42a) est, durant le travail, au moins sensiblement dirigé suivant la direction d'avance (7) et est décalé par rapport à l'axe géométrique (15a) de la première articulation (15).

Le premier tronçon (25) et le deuxième tronçon (27) sont liés l'un à l'autre au moyen d'un troisième accouplement (43). Ce troisième accouplement (43) comprend tout d'abord un troisième joint universel (44) au moyen duquel il est lié au premier arbre d'entraînement (28). Le troisième accouplement (43) comprend ensuite un quatrième joint universel (45) au moyen duquel il est lié à l'arbre d'entrée (42).

Ce troisième accouplement (43) est guidé en rotation dans un organe porteur (47) lié au châssis (2) au moyen d'une quatrième articulation (48) d'axe géométrique (48a) au moins sensiblement vertical et coupant au moins sensiblement l'axe de rotation (42a) de l'arbre d'entrée (42) suivant un angle d'environ 90°. Cet axe géométrique (48a) est en outre, selon une vue latérale et considéré de bas en haut, légèrement incliné vers l'avant.

Sur les différentes figures, on voit en sus que le troisième accouplement (43) s'étend hors du timon (4) et que le premier arbre d'entraînement (28) émerge dudit timon (4).

Selon l'exemple de réalisation représenté, on voit plus précisément sur les différentes figures que le premier arbre d'entraînement (28) s'étend en dehors du timon (4) et qu'il est en outre prévue une protection (49) qui enveloppe au moins partiellement le troisième accouplement (43) et la partie dudit premier arbre d'entraînement (28) qui s'étend en dehors dudit timon (4).

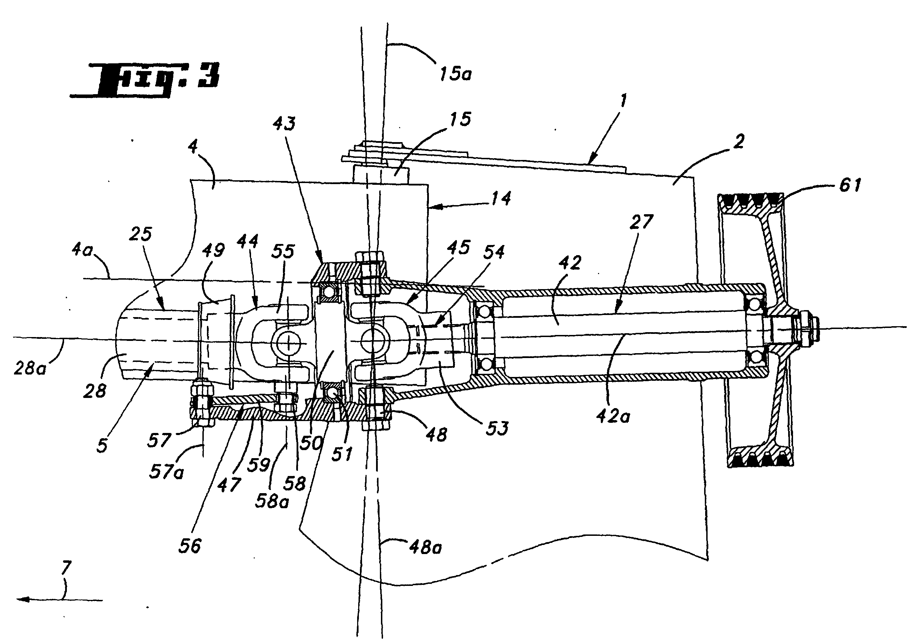

Sur la figure 3 notamment, on voit encore que les joints universels (44, 45) du troisième accouplement (43) comportent une double mâchoire rigide (50). Cette double mâchoire rigide (50) est guidée en rotation dans l'organe porteur (47) au moyen d'un roulement (51).

On remarquera également que l'axe géométrique (48a) de la quatrième articulation (48) passe au moins sensiblement par le centre du quatrième joint universel (45), ce qui permet avantageusement de pivoter la double mâchoire rigide (50) et l'organe porteur (47) autour dudit axe géométrique (48a) tout en assurant une bonne transmission dudit mouvement.

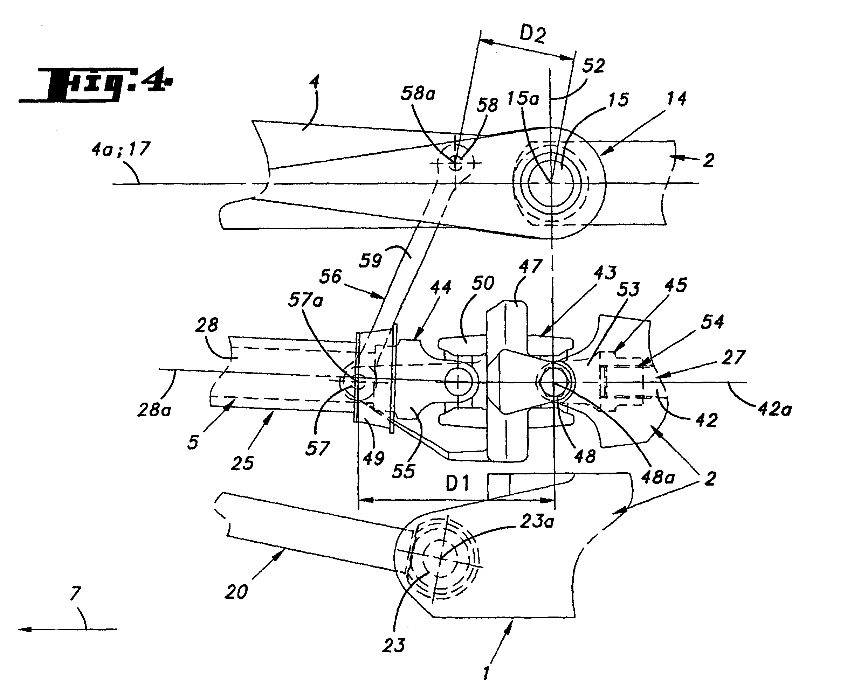

On notera aussi à la lumière des figures 4 à 6, que l'axe géométrique (15a) de la première articulation (15) et l'axe géométrique (48a) de la quatrième articulation (48) s'étendent au moins sensiblement dans un plan vertical (52) qui s'étend au moins sensiblement orthogonalement à la direction d'avance (7) au travail.

Selon l'exemple de réalisation représenté, on remarquera encore que le quatrième joint universel (45) comporte en sus une mâchoire (53) qui est liée à l'arbre d'entrée (42) au moyen d'une liaison coulissante (54) autorisant un mouvement relatif entre eux suivant l'axe de rotation (42a) dudit arbre d'entrée (42). Une telle réalisation permet avantageusement de faciliter le montage de cet ensemble et de supprimer les contraintes d'assemblage auxquelles pourraient être soumises les différentes articulations.

Le troisième joint universel (44), quant à lui, comporte en sus une mâchoire (55) qui est fixée à l'extrémité correspondante du premier arbre d'entraînement (28). Ce dernier est, de ce fait, réalisé sous forme d'un arbre télescopique, ce qui permet notamment de compenser les variations de longueur apparaissant dans la ligne d'entraînement lors du pivotement du timon (4) autour de l'axe géométrique (15a) de la première articulation (15) et ainsi d'autoriser la bonne transmission du mouvement lors dudit pivotement du timon (4).

Pour assurer le bon positionnement du troisième accouplement (43) dans toutes les positions du timon (4), l'organe porteur (47) est orienté en conséquence autour de l'axe géométrique (48a) de la quatrième articulation (48). A cet effet, est prévu un organe de pilotage (56) lié d'une part à l'organe porteur (47) au moyen d'une cinquième articulation (57) d'axe géométrique (57a) et d'autre part au timon (4) au moyen d'une sixième articulation (58) d'axe géométrique (58a).

Cet organe de pilotage (56) est, selon l'exemple de réalisation représenté, composé d'un tirant (59) articulé entre l'organe porteur (47) et le timon (4) au moyen de la cinquième articulation (57) et de la sixième articulation (58).

Sur les figures 4, 5 et 6, on voit, en sus, que l'organe de pilotage (56) forme un quadrilatère déformable avec le timon (4), le châssis (2) et l'organe porteur (47).

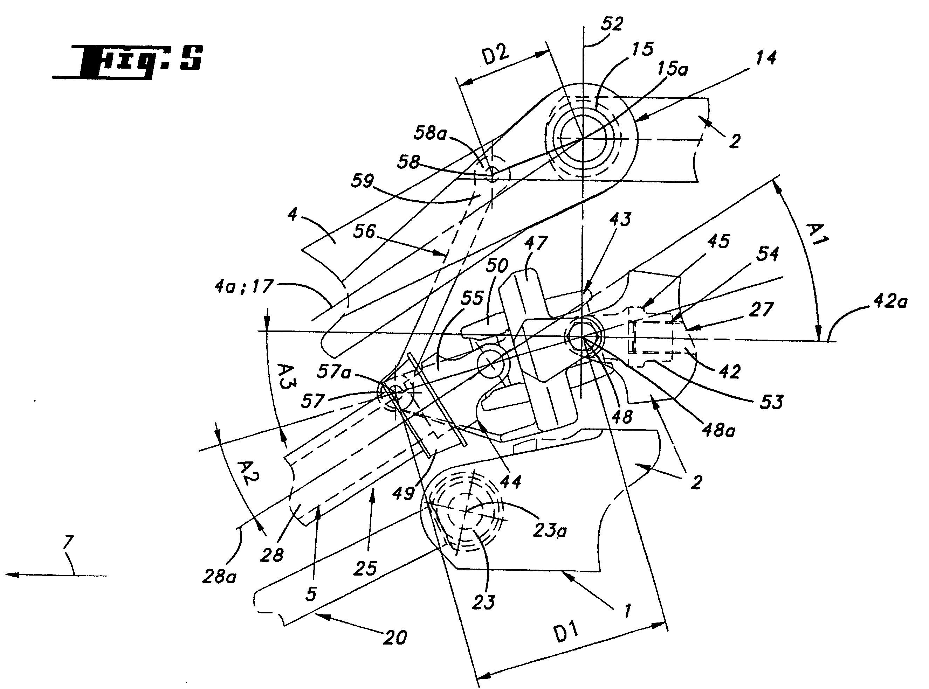

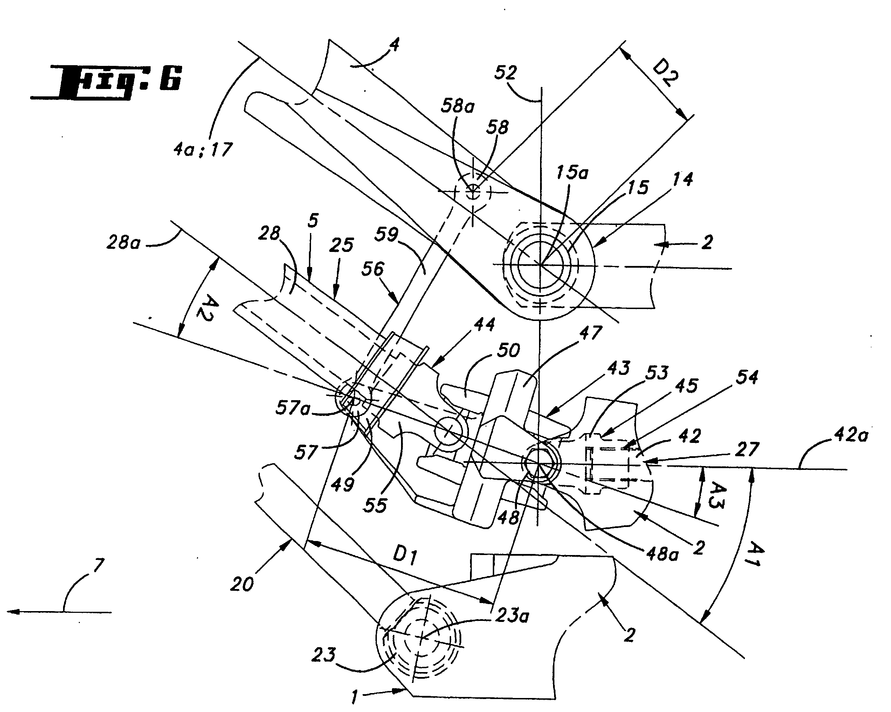

On notera encore que la distance (D1) entre l'axe géométrique (48a) et l'axe géométrique (57a) est environ le double de la distance (D2) entre l'axe géométrique (15a) et l'axe géométrique (58a). Un tel agencement des axes géométriques (48a, 57a, 15a, 58a) permet avantageusement de moins solliciter le troisième joint universel (44) et le quatrième joint universel (45). En effet, on voit sur les figures 5 et 6 que l'angle (A2) du troisième joint universel (44) et l'angle (A3) du quatrième joint universel (45), sont chacun sensiblement égal à la moitié de l'angle (A1) entre l'axe de rotation (28a) du premier arbre d'entraînement (28) et l'axe de rotation (42a) de l'arbre d'entrée (42).

Cette faucheuse (1) fonctionne de la façon suivante.

Sur les figures 1 et 2, on voit que la faucheuse (1) s'étend en position de transport dans le prolongement du véhicule tracteur (13) et le mécanisme de récolte (3) s'étend sensiblement transversalement à la direction d'avance (7).

Lorsque l'opérateur souhaite faucher une bande de produit sur pied située à droite du véhicule tracteur (13), il commande l'élément de manoeuvre (20) de manière à ce que celui-ci se raccourcisse. Ceci a pour effet de pivoter le châssis (2) et le mécanisme de récolte (3) autour de l'axe géométrique (15a) de la première articulation (15). Lors de ce pivotement, l'organe porteur (47) est automatiquement pivoté de la valeur adéquate autour de l'axe géométrique (48a) de la quatrième articulation (48) au moyen du tirant (59), ce qui permet d'assurer une bonne transmission du mouvement du premier arbre d'entraînement (28) vers l'arbre d'entrée (42) du fait que l'angle (A1) entre ces arbres (28, 42) est sensiblement divisé par deux au niveau de chaque joint universel (44, 45) du troisième accouplement (43).

L'opérateur anime ensuite la faucheuse (1) au moyen du véhicule tracteur (13). Le mouvement est successivement transmis par l'arbre de transmission à joints universels (35), le premier boîtier de transmission (32), le premier accouplement (33), le deuxième .arbre d'entraînement (29), le deuxième accouplement (37), le premier arbre d'entraînement (28), le troisième accouplement (43) et l'arbre d'entrée (42). Cet arbre d'entrée (42) entraîne ensuite une transmission à courroies (61), faisant également partie du deuxième tronçon (27). Cette transmission à courroies (61) s'étend sensiblement parallèlement au châssis (2), c'est-à-dire transversalement à la direction d'avance (7) durant le travail.

La transmission à courroies (61) est en liaison d'entraînement avec un troisième tronçon (62) d'organes de transmission. Celui-ci est essentiellement constitué d'un deuxième arbre de transmission à joints universels (63) qui s'étend sensiblement suivant la direction d'avance (7) durant le travail. Ce deuxième arbre de transmission à joints universels (63) transmet le mouvement à un quatrième tronçon (64) d'organes de transmission. Celui-ci comprend notamment un deuxième boîtier de transmission (65) situé sur le mécanisme de récolte (3), ledit deuxième boîtier de transmission (65) entraînant ensuite les organes de coupe (9) dudit mécanisme de récolte (3) d'une manière connue de l'homme de l'art.

En bout de parcelle, l'opérateur effectue un demi-tour et revient en sens inverse en fauchant cette fois-ci une bande de produit sur pied située à gauche du véhicule tracteur (13). Pour ce faire, l'opérateur commande l'élément de manoeuvre (20) dans le sens inverse de manière à ce que celui-ci s'allonge. Ce faisant, le châssis (2) et le mécanisme de récolte (3) pivotent autour de l'axe géométrique (15a) de la première articulation (15) jusque dans l'autre position de travail (non représentée) en passant par la position de transport représentée sur la figure 1. Lors de ce pivotement, l'organe porteur (47) est automatiquement pivoté de la valeur adéquate autour de l'axe géométrique (48a) de la quatrième articulation (48) au moyen du tirant (59). On notera que durant toute la phase de la mise en position de travail à gauche, l'entraînement du mécanisme de récolte (3) est assuré au moyen des organes de transmission (5) tels que décrits précédemment.

Pour revenir dans la position de transport représentée sur la figure 1 ou dans la position de travail à droite, l'opérateur procède de la même manière que celle décrite précédemment en commandant l'élément de manoeuvre (20) de manière à ce que celui-ci se raccourcisse.

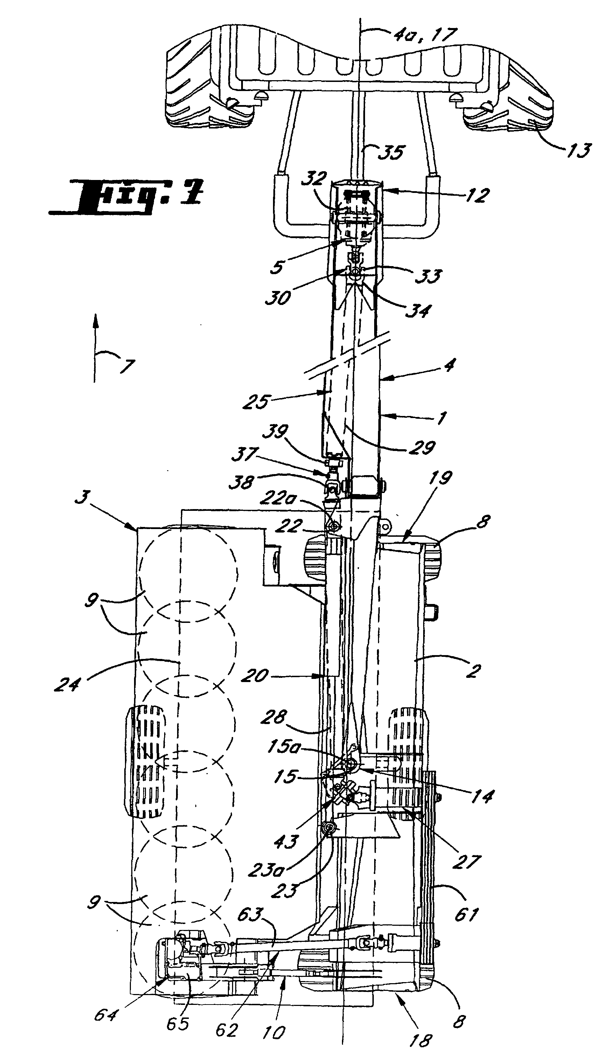

La figure 7 montre une autre manière de transporter la faucheuse (1).

Dans cette autre position de transport, l'élément de manoeuvre (20) est allongé au maximum et le châssis (2) s'étend sensiblement parallèlement à la direction d'avance (7) au transport. Cette autre position de transport nécessite, par exemple, un chariot (24) qui permet avantageusement de transporter la faucheuse (1) dans une largeur réduite.

Pour pouvoir pivoter le timon (4) dans une position sensiblement parallèle au châssis (2), on notera que la troisième articulation (23) par l'intermédiaire de laquelle l'organe de manoeuvre (20) est lié au châssis (2) s'étend, par rapport à la première articulation (15), du côté opposé à celui où s'étend le timon (4) dans cette autre position de transport.

Il en est de même du troisième accouplement (43) et de l'arbre d'entré (42).

On notera en outre que ladite troisième articulation (23) s'étend quelque peu en avant par rapport à la première articulation (15) lorsque la faucheuse (1) est en position de travail.

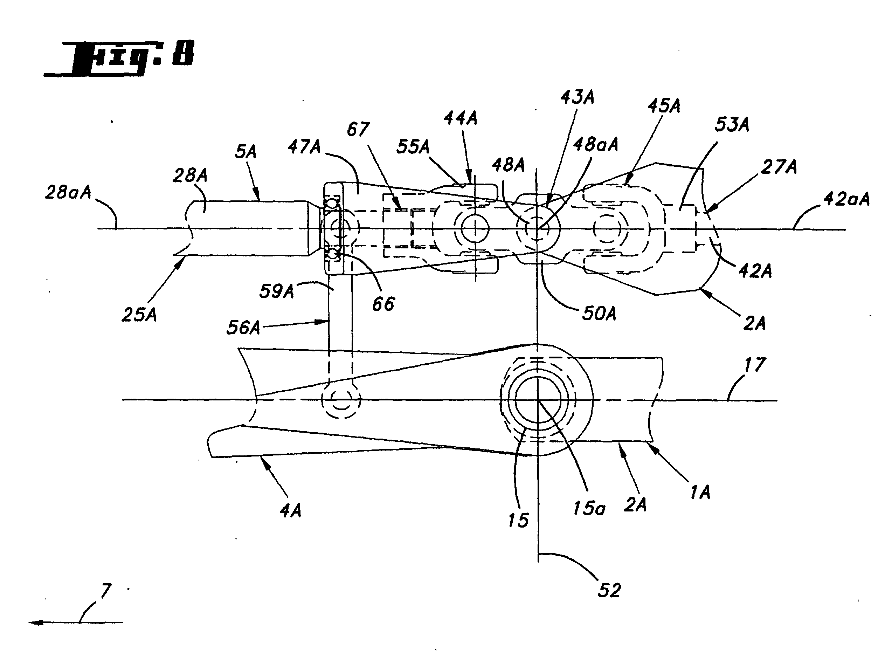

La figure 8 représente un deuxième exemple de réalisation d'une faucheuse (1A) selon l'invention. Ce deuxième exemple de réalisation comporte un certain nombre d'éléments qui ont été décrits précédemment. Ces éléments garderont par conséquent le même numéro de repère et ne seront pas redécrits. Il comporte également un certain nombre d'éléments qui sont comparables à des éléments de la faucheuse (1) décrite précédemment. Ces éléments seront affectés du même numéro de repère que ces éléments comparables de la faucheuse (1) et seront suivis de la lettre A. Ils ne seront décrits que si cela s'avère nécessaire.

La faucheuse (1A) représentée sur la figure 8 se différencie principalement du premier exemple de réalisation par le fait que l'organe de pilotage (56A) (tirant (59A) forme un parallélogramme déformable avec le timon (4A), le châssis (2A) et l'organe porteur (47A).

On remarquera encore que l'axe géométrique (48aA) de l'articulation (48A) liant l'organe porteur (47A) au châssis (2A) s'étend devant le centre du quatrième joint universel (45A) du troisième accouplement (43A) et sensiblement à distance égale de ce dernier et du centre du troisième joint universel (44A). Lorsque le timon (4A) se trouve dans une position au moins sensiblement orthogonale par rapport au châssis (2A), l'axe géométrique (48aA) coupe sensiblement une droite passant par les centres du troisième joint universel (44A) et du quatrième joint universel (45A), cette droite étant sensiblement confondue avec l'axe de rotation (42aA) de l'arbre d'entrée (42A).

On remarquera encore, à la lumière de la figure 8, que le premier arbre d'entraînement (28A) du premier tronçon (25A) d'organes de transmission (5A) est guidé en rotation dans l'organe porteur (47A) au moyen d'un roulement (66).

On notera aussi que, selon cette deuxième forme de réalisation, la liaison entre la mâchoire (55A) du troisième joint universel (44A) et le premier arbre d'entraînement (28A) est une liaison (67) coulissante suivant l'axe de rotation (28aA) de ce dernier, ce qui permet, par exemple, d'avoir un arbre d'entraînement (28A) rigide et non télescopique. En outre, la mâchoire (53A) du quatrième joint universel (45A) est, dans ce cas, montée de manière fixe sur l'arbre d'entrée (42A) du deuxième tronçon (27A) d'organes de transmission (5A).

On notera enfin encore que, dans ce deuxième exemple de réalisation, le troisième joint universel (44A) et le quatrième joint universel (45A) comportent également une double mâchoire rigide (50A).

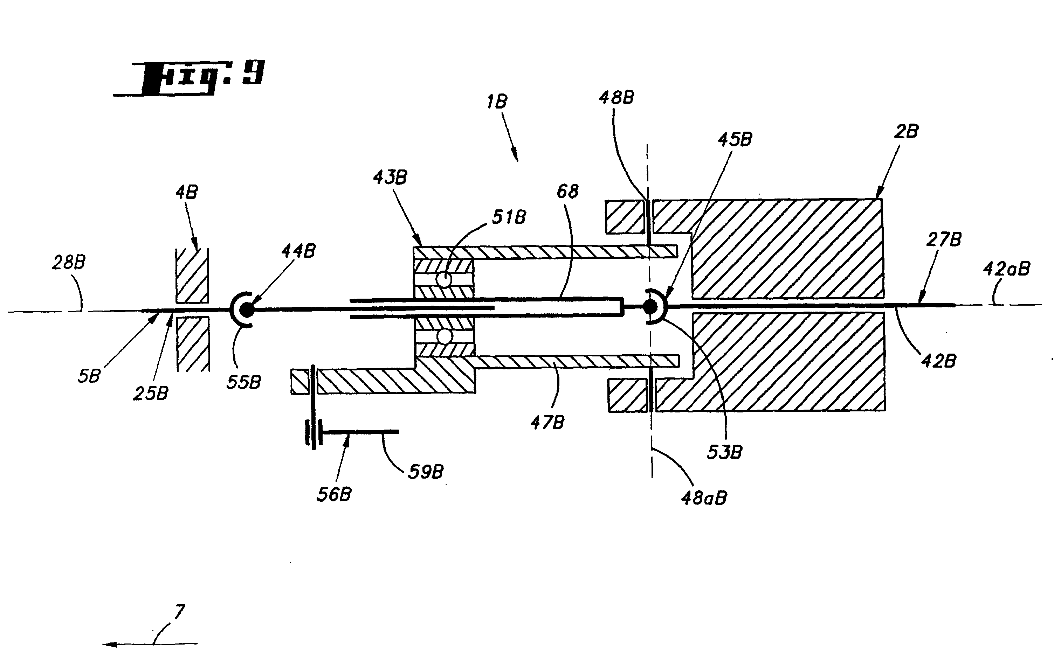

La figure 9 représente un troisième exemple de réalisation d'une faucheuse (1B) selon l'invention. Ce troisième exemple de réalisation comporte un certain nombre d'éléments qui ont été décrits précédemment. Ces éléments garderont par conséquent le même numéro de repère et ne seront pas redécrits. Il comporte également un certain nombre d'éléments qui sont comparables à des éléments de la faucheuse (1) décrite précédemment. Ces éléments seront affectés du même numéro de repère que ces éléments comparables de la faucheuse (1) et seront suivis de la lettre B. Ils ne seront décrits que si cela s'avère nécessaire.

La partie de faucheuse représentée sur la figure 9, se différencie principalement du premier exemple de réalisation par le fait que la mâchoire (55B) du troisième joint universel (44B) est fixe par rapport au premier arbre d'entraînement (28B) et que la mâchoire (53B) du quatrième joint universel (45B) est fixe par rapport à l'arbre d'entrée (42B). Pour compenser les variations de longueur qui apparaissent dans la ligne d'entraînement lors du pivotement du timon (4B), il est prévu que le troisième joint universel (44B) et le quatrième joint universel (45B) sont télescopiques l'un par rapport à l'autre suivant un axe géométrique passant par les centres desdits deux joints universels (44B, 45B). A cet effet, on remarquera à la lumière de la figure 9, qu'il est prévu un arbre de transmission télescopique (68) situé entre le troisième joint universel (44B) et le quatrième joint universel (45B). Cet arbre de transmission télescopique (68) est guidé en rotation dans l'organe porteur (47B) au moyen d'un roulement (51B).

Diverses modifications peuvent être apportées aux exemples qui viennent d'être décrits, notamment en ce qui concerne la constitution des divers éléments ou par substitution d'équivalents techniques sans pour autant sortir du domaine de protection défini par les revendications.

C'est ainsi qu'il est, par exemple, parfaitement possible de réaliser les arbres d'entraînement (28, 29 ; 28A, 29 ; 28B, 29) en une seule pièce s'étendant au moins partiellement en dehors du timon (4 ; 4A ; 4B). Il pourra alors, en sus, être prévu une protection (49) qui enveloppe au moins sensiblement le troisième accouplement (43 ; 43A ; 43B) et la partie dudit arbre d'entraînement en une seule pièce qui s'étend en dehors dudit timon (4 ; 4A ; 4B).

## Revendications

1. Machine agricole de récolte comportant :
- un châssis (2 ; 2A ; 2B) s'étendant, durant le travail, transversalement à la direction d'avance (7) ;
- un mécanisme de récolte (3) qui est suspendu de manière déplaçable dans le châssis (2 ; 2A ; 2B) au moyen d'un dispositif de suspension (10) ;
- un timon (4 ; 4A ; 4B) lié au châssis (2 ; 2A ; 2B) au moyen d'une première articulation (15) d'axe géométrique (15a) au moins sensiblement vertical, ledit timon (4 ; 4A ; 4B) étant destiné à lier la machine de récolte à un véhicule tracteur (13) ;
- des organes de transmission (5 ; 5A ; 5B) destinés à transmettre le mouvement d'une source motrice jusqu'au mécanisme de récolte (3) et comprenant notamment :
* un premier tronçon (25 ; 25A ; 25B) supporté par le timon (4 ; 4A ; 4B) et comprenant au moins un premier arbre d'entraînement (28 ; 28A ; 28B) ;
* un deuxième tronçon (27 ; 27A ; 27B) supporté par le châssis (2 ; 2A ; 2B) et comprenant au moins un arbre d'entrée (42 ; 42A ; 42B) dont l'axe de rotation (42a ; 42aA ; 42aB) est, durant le travail, au moins sensiblement dirigé suivant la direction d'avance (7) ;
* un accouplement (43 ; 43A ; 43B) comportant un joint universel (44 ; 44A ; 44B) au moyen duquel il est lié au premier arbre d'entraînement (28 ; 28A ; 28B) et un autre joint universel (45 ; 45A ; 45B) au moyen duquel il est lié à l'arbre d'entrée (42 ; 42A ; 42B) ;
***caractérisée en ce* que** :
- l'axe de rotation (42a ; 42aA ; 42aB) de l'arbre d'entrée (42 ; 42A ; 42B) est décalé par rapport à l'axe géométrique (15a) de la première articulation (15) liant le timon (4 ; 4A ; 4B) au châssis (2 ; 2A ; 2B) ;
- le premier arbre d'entraînement (28 ; 28A ; 28B) ou l'accouplement (43 ; 43A ; 43B) sont guidés en rotation dans un organe porteur (47 ; 47A ; 47B) lié au châssis (2 ; 2A ; 2B) au moyen d'une autre articulation (48 ; 48A ; 48B) d'axe géométrique (48a ; 48aA ; 48aB) au moins sensiblement vertical et coupant au moins sensiblement l'axe de rotation (42a ; 42aA ; 42aB) de l'arbre d'entrée (42 ; 42A ; 42B) ;
- un organe de pilotage (56 ; 56A ; 56B) est lié entre l'organe porteur (47 ; 47A ; 47B) et le timon (4 ; 4A ; 4B).

2. Machine agricole de récolte selon la revendication 1, ***caractérisée en ce* que** le joint universel (44 ; 44A) et l'autre joint universel (45 ; 45A) de l'accouplement (43 ; 43A) comporte une double mâchoire rigide (50 ; 50A).

3. Machine agricole de récolte selon la revendication 2, ***caractérisée en ce* que** la liaison entre le joint universel (44A) et le premier arbre d'entraînement (28A) est une liaison (67) coulissante suivant l'axe de rotation (28aA) de ce dernier.

4. Machine agricole de récolte selon la revendication 2, ***caractérisée en ce* que** la liaison entre l'autre joint universel (45) et l'arbre d'entrée (42) est une liaison coulissante (54) suivant l'axe de rotation (42a) de ce dernier.

5. Machine agricole de récolte selon la revendication 2, ***caractérisée en ce* que** :
- une mâchoire (55) correspondante du joint universel (44) est fixe par rapport au premier arbre d'entraînement (28) ;
- le premier arbre d'entraînement (28) est un arbre télescopique.

6. Machine agricole de récolte selon la revendication 1, ***caractérisée en ce* que** :
- une mâchoire (55B) correspondante du joint universel (44B) est fixe par rapport au premier arbre d'entraînement (28B) ;
- une mâchoire (53B) correspondante de l'autre joint universel (45B) est fixe par rapport à l'arbre d'entrée (42B) ;
- le joint universel (44B) et l'autre joint universel (45B) sont télescopiques l'un par rapport à l'autre suivant un axe géométrique passant par les centres des deux joints universels (44B, 45B).

7. Machine agricole de récolte selon l'une quelconque des revendications 1 à 6, ***caractérisée en ce* que** :
- le premier arbre d'entraînement (28A) ou une mâchoire (55A) correspondante du joint universel (44A) sont guidés en rotation dans l'organe porteur (47A) ;
- l'axe géométrique (48aA) de l'autre articulation (48A) liant l'organe porteur (47A) au châssis (2A) coupe l'axe géométrique passant par les centres des deux joints universels (44A ; 45A) au moins sensiblement à mi-distance entre lesdits centres lorsque le timon (4A) se trouve dans une position au moins sensiblement orthogonale par rapport au châssis (2A).

8. Machine agricole de récolte selon l'une quelconque des revendications 1 à 6, ***caractérisée en ce* que** :
- la partie de l'accouplement (43 ; 43B) située entre les deux joints universels (44, 45 ; 44B, 45B) est guidée en rotation dans l'organe porteur (47 ; 47B) ;
- l'axe géométrique (48a ; 48aB) de l'autre articulation (48 ; 48B) liant l'organe porteur (47 ; 47B) au châssis (2 ; 2B) passe au moins sensiblement par le centre de l'autre joint universel (45).

9. Machine agricole de récolte selon la revendication 7 ou 8, ***caractérisée en ce* que** l'axe géométrique (15a) de la première articulation (15) et l'axe géométrique (48a ; 48aA ; 48aB) de l'autre articulation (48 ; 48A ; 48B) s'étendent au moins sensiblement dans un plan vertical (52) s'étendant au moins sensiblement orthogonalement à la direction d'avance (7) au travail.

10. Machine agricole de récolte selon l'une quelconque des revendications 1 à 9, ***caractérisée en ce* que** l'organe de pilotage (56 ; 56A ; 56B) forme un quadrilatère déformable avec le timon (4 ; 4A ; 4B), le châssis (2 ; 2A ; 2B) et l'organe porteur (47 ; 47A ; 47B).

11. Machine agricole de récolte selon la revendication 10, ***caractérisée en ce* que** le quadrilatère est au moins sensiblement un parallélogramme.

12. Machine agricole de récolte selon l'une quelconque des revendications 1 à 11, ***caractérisée en ce* que** l'organe de pilotage (56 ; 56A ; 56B) est constitué d'un tirant (59 ; 59A ; 59B) articulé entre le timon (4 ; 4A ; 4B) et l'organe porteur (47 ; 47A ; 47B).

13. Machine agricole de récolte selon l'une quelconque des revendications 1 à *12,* ***caractérisée en ce* qu'**en vue latérale, l'axe géométrique (48a ; 48aA ; 48aB) de l'autre articulation (48 ; 48A ; 48B), considéré de bas en haut, est légèrement incliné vers l'avant.

14. Machine agricole de récolte selon l'une quelconque des revendications 1 à 13, ***caractérisée en ce* que**, en vue latérale, l'axe géométrique (15a) de la première articulation (15), considéré de bas en haut, est légèrement incliné vers l'arrière.

15. Machine agricole de récolte selon l'une quelconque des revendications 1 à *14,* ***caractérisée en ce* que** :
- le premier tronçon (25 ; 25A ; 25B) d'organes de transmission (5 ; 5A ; 5B) comporte un deuxième arbre d'entraînement (29) qui transmet le mouvement depuis l'avant du timon (4 ; 4A ; 4B) jusqu'au premier arbre d'entraînement (28 ; 28A ; 28B);
- le premier arbre d'entraînement (28 ; 28A ; 28B) et le deuxième arbre d'entraînement (29) sont accouplés l'un à l'autre au moyen d'un deuxième accouplement (37).

16. Machine agricole de récolte selon la revendication 15, ***caractérisée en ce* que** le deuxième accouplement (37) est constitué d'un joint universel (38).

17. Machine agricole de récolte selon la revendication 15 ou 16, ***caractérisée en ce* que** le premier arbre d'entraînement (28 ; 28A ; 28B) et le deuxième arbre d'entraînement (29) sont supportés directement par le timon (4 ; 4A ; 4B) au moyen d'un seul palier (39) s'étendant dans le voisinage du deuxième accouplement (37).

18. Machine agricole de récolte selon la revendication 17, ***caractérisée en ce* que** le palier (39) est lié au timon (4 ; 4A ; 4B) au moyen de supports élastiques (40).

19. Machine agricole de récolte selon la revendication 17 ou 18, ***caractérisée en ce* que** le palier (39) est monté sur le deuxième arbre d'entraînement (29).

20. Machine agricole de récolte selon l'une quelconque des revendications 15 à 19, ***caractérisée en ce* que** l'axe de rotation (29a) du deuxième arbre d'entraînement (29) est au moins sensiblement confondu avec l'axe longitudinal (4a ; 4aA) du timon (4 ; 4A ; 4B).

21. Machine agricole de récolte selon l'une quelconque des revendications 1 à 20 ***caractérisée en ce* que** :
- l'accouplement (43 ; 43A ; 43B) s'étend hors du timon (4 ; 4A ; 4B) ;
- le premier arbre d'entraînement (28 ; 28A ; 28B) émerge du timon (4 ; 4A ; 4B) ;
- il est prévu une protection (49) qui enveloppe au moins sensiblement l'accouplement (43 ; 43A ; 43B) et la partie du premier arbre d'entraînement (28 ; 28A ; 28B) qui émerge du timon (4 ; 4A ; 4B).

22. Machine agricole de récolte selon l'une quelconque des revendications 1 à 21, ***caractérisée en ce* que** :
- le timon (4 ; 4A ; 4B) peut être pivoté dans une position de transport dans laquelle il s'étend au moins sensiblement parallèlement au châssis (2 ; 2A ; 2B) ;
- l'axe de rotation (42a ; 42aA ; 42aB) de l'arbre d'entrée (42 ; 42A ; 42B) s'étend, par rapport à la première articulation (15), du côté opposé à celui où s'étend le timon (4 ; 4A ; 4B) en position de transport.

## Claims

1. Agricultural harvester comprising:
- a chassis (2; 2A; 2B) extending, during work, transversely to the direction of forward travel (7);
- a harvesting mechanism (3) suspended moveably in the chassis (2; 2A; 2B) by means of a suspension device (10);
- a drawbar (4; 4A; 4B) connected to the chassis (2; 2A; 2B) by means of a first articulation (15), the geometric axis (15a) of which is at least substantially vertical, the said drawbar (4; 4A; 4B) being intended to connect the harvester to a tractor vehicle (13);
- transmission elements (5; 5A; 5B) intended to transmit the motion from a source of motor power to the harvesting mechanism (3) and comprising, in particular:
* a first set (25; 25A; 25B) supported by the drawbar (4; 4A; 4B) and comprising at least a first drive shaft (28; 28A; 28B);
* a second set (27; 27A; 27B) supported by the chassis (2; 2A; 2B) and comprising at least one input shaft (42; 42A; 42B), the axis (42a; 42aA; 42aB) of rotation of which is, during work, directed at least substantially in the direction of forward travel (7);
* a coupling (43; 43A; 43B) comprising a universal joint (44; 44A; 44B) by means of which it is connected to the first drive shaft (28; 28A; 28B) and another universal joint (45; 45A; 45B) by means of which it is connected to the input shaft (42; 42A; 42B);
***characterized in* that**:
- the axis (42a; 42aA; 42aB) of rotation of the input shaft (42; 42A; 42B) is offset with respect to the geometric axis (15a) of the first articulation (15) connecting the drawbar (4; 4A; 4B) to the chassis (2; 2A; 2B);
- the first drive shaft (28; 28A; 28B) or the coupling (43; 43A; 43B) are guided in rotation in a carrier element (47; 47A; 47B) connected to the chassis (2; 2A; 2B) by means of another articulation (48; 48A; 48B), the geometric axis (48a; 48aA; 48aB) of which is at least substantially vertical and at least substantially intersects the axis (42a; 42aA; 42aB) of rotation of the input shaft (42; 42A; 42B);
- an orientation element (56; 56A; 56B) is connected between the carrier element (47; 47A; 47B) and the drawbar (4; 4A; 4B).

2. Agricultural harvester according to Claim 1, ***characterized in* that** the universal joint (44; 44A) and the other universal joint (45; 45A) of the coupling (43; 43A) has a rigid double pair of jaws (50; 50A).

3. Agricultural harvester according to Claim 2, ***characterized in* that** the connection between the universal joint (44A) and the first drive shaft (28A) is a connection (67) that can slide along the axis (28aA) of rotation thereof.

4. Agricultural harvester according to Claim 2, ***characterized in* that** the connection between the other universal joint (45) and the input shaft (42) is a connection (54) that can slide along the axis (42a) of rotation thereof.

5. Agricultural harvester according to Claim 2, ***characterized in* that**:
- a corresponding pair of jaws (55) of the universal joint (44) is stationary with respect to the first drive shaft (28);
- the first drive shaft (28) is a telescopic shaft.

6. Agricultural harvester according to Claim 1, ***characterized in* that**:
- a corresponding pair of jaws (55B) of the universal joint (44B) is stationary with respect to the first drive shaft (28B);
- a corresponding pair of jaws (53B) of the other universal joint (45B) is stationary with respect to the input shaft (42B);
- the universal joint (44B) and the other universal joint (45B) are telescopic with respect to one another about a geometric axis that passes through the centres of the two universal joints (44B, 45B).

7. Agricultural harvester according to any one of Claims 1 to 6, ***characterized in* that**:
- the first drive shaft (28A) or a corresponding pair of jaws (55A) of the universal joint (44A) are guided in rotation in the carrier element (47A);
- the geometric axis (48aA) of the other articulation (48A) connecting the carrier element (47A) to the chassis (2A) intersects the geometric axis passing through the centres of the two universal joints (44A; 45A) at least substantially midway between the said centres when the drawbar (4A) is in a position at least substantially orthogonal to the chassis (2A).

8. Agricultural harvester according to any one of Claims 1 to 6, ***characterized in* that**:
- that part of the coupling (43; 43B) which lies between the two universal joints (44, 45; 44B, 45B) is guided in rotation in the carrier element (47; 47B);
- the geometric axis (48a; 48aB) of the other articulation (48; 48B) connecting the carrier element (47; 47B) to the chassis (2; 2B) passes at least substantially through the centre of the other universal joint (45).

9. Agricultural harvester according to Claim 7 or 8, ***characterized in* that** the geometric axis (15a) of the first articulation (15) and the geometric axis (48a; 48aA; 48aB) of the other articulation (48; 48A; 48B) extend at least substantially in a vertical plane (52) which runs at least substantially orthogonally to the direction of forward travel (7) during work.

10. Agricultural harvester according to any one of Claims 1 to 9, ***characterized in* that** the orientation element (56; 56A; 56B) forms a deformable quadrilateral with the drawbar (4; 4A; 4B), the chassis (2; 2A; 2B) and the carrier element (47; 47A; 47B).

11. Agricultural harvester according to Claim 10, ***characterized in* that** the quadrilateral is at least substantially a parallelogram.

12. Agricultural harvester according to any one of Claims 1 to 11, ***characterized in* that** the orientation element (56; 56A; 56B) consists of a tie-rod (59; 59A; 59B) articulated between the drawbar (4; 4A; 4B) and the carrier element (47; 47A; 47B).

13. Agricultural harvester according to any one of Claims 1 to 12, ***characterized in* that**, in side view, the geometric axis (48a; 48aA; 48aB) of the other articulation (48; 48A; 48B), considered from the bottom upwards, is inclined forwards slightly.

14. Agricultural harvester according to any one of Claims 1 to 13, ***characterized in* that**, in side view, the geometric axis (15a) of the first articulation (15), considered from the bottom upwards, is inclined backwards slightly.

15. Agricultural harvester according to any one of Claims 1 to 14, ***characterized in* that**:
- the first set (25; 25A; 25B) of transmission elements (5; 5A; 5B) comprises a second drive shaft (29) which transmits the motion from the front of the drawbar (4; 4A; 4B) to the first drive shaft (28; 28A; 28B);
- the first drive shaft (28; 28A; 28B) and the second drive shaft (29) are coupled together by means of a second coupling (37).

16. Agricultural harvester according to Claim 15, ***characterized in* that** the second coupling (37) consists of a universal joint (38).

17. Agricultural harvester according to Claim 15 or 16, ***characterized in* that** the first drive shaft (28; 28A; 28B) and the second drive shaft (29) are supported directly by the drawbar (4; 4A; 4B) by means of a second bearing (39) extending in the vicinity of the second coupling (37).

18. Agricultural harvester according to Claim 17, ***characterized in* that** the bearing (39) is connected to the drawbar (4; 4A; 4B) by means of elastic supports (40).

19. Agricultural harvester according to Claim 17 or 18, ***characterized in* that** the bearing (39) is mounted on the second drive shaft (29).

20. Agricultural harvester according to any one of Claims 15 to 19, ***characterized in* that** the axis (29a) of rotation of the second drive shaft (29) is at least substantially coincident with the longitudinal axis (4a; 4aA) of the drawbar (4; 4A; 4B).

21. Agricultural harvester according to any one of Claims 1 to 20, ***characterized in* that**:
- the coupling (43; 43A; 43B) extends outside the drawbar (4; 4A; 4B);
- the first drive shaft (28; 28A; 28B) emerges from the drawbar (4; 4A; 4B);
- there is a guard (49) which at least substantially envelops the coupling (43; 43A; 43B) and that part of the first drive shaft (28; 28A; 28B) which emerges from the drawbar (4; 4A; 4B).

22. Agricultural harvester according to any one of Claims 1 to 21, ***characterized in* that**:
- the drawbar (4; 4A; 4B) can be pivoted into a transport position in which it extends at least substantially parallel to the chassis (2; 2A; 2B);
- the axis (42a; 42aA; 42aB) of rotation of the input shaft (42; 42A; 42B) extends, with respect to the first articulation (15), on the opposite side to the side on which the drawbar (4; 4A; 4B) extends in the transport position.

## Patentansprüche

1. Landwirtschaftliche Erntemaschine, die
- einen Rahmen (2; 2A; 2B), der sich im Betrieb quer zur Fahrtrichtung (7) erstreckt;
- einen Erntemechanismus (3), der mittels einer Aufhängungsvorrichtung (10) verschiebbar im Rahmen (2; 2A; 2B) aufgehängt ist;
- eine Deichsel (4; 4A; 4B), die mittels eines ersten Gelenks (15) mit einer zumindest im Wesentlichen vertikalen geometrischen Achse (15a) mit dem Rahmen (2; 2A; 2B) verbunden ist, wobei die Deichsel (4; 4A; 4B) die Erntemaschine mit einem Schlepper (13) verbinden soll;
- Kraftübertragungselemente (5; 5A; 5B), die die Bewegung von einer Antriebsquelle zum Erntemechanismus (3) übertragen sollen und insbesondere
* einen ersten Abschnitt (25; 25A; 25B) der von der Deichsel (4; 4A; 4B) gestützt wird und mindestens eine erste Antriebswelle (28; 28A; 28B) enthält;
* einen zweiten Abschnitt (27; 27A, 27B), der vom Rahmen (2; 2A; 2B) gestützt wird und mindestens eine Eingangswelle (42; 42A; 42B) enthält, deren Drehachse (42a; 42aA; 42aB) im Betrieb zumindest im Wesentlichen in Fahrtrichtung (7) ausgerichtet ist;
* eine Kupplung (43; 43A; 43B) mit einem Kardangelenk (44; 44A; 44B), mittels dessen sie mit der ersten Antriebswelle (28; 28A; 28B) verbunden ist, und einem anderen Kardangelenk (45; 45A; 45B), mittels dessen sie mit der Eingangswelle (42; 42A; 42B) verbunden ist,
aufweisen,
umfasst, ***dadurch gekennzeichnet*, dass**
- die Drehachse (42a; 42aA; 42aB) der Eingangswelle (42; 42A; 42B) bezüglich der geometrischen Achse (15a) des die Deichsel (4; 4A; 4B) mit dem Rahmen (2; 2A; 2B) verbindenden ersten Gelenks (15) versetzt ist;
- die erste Antriebswelle (28; 28A; 28B) oder die Kupplung (43; 43A; 43B) in einem Tragelement (47; 47A; 47B) drehbar geführt werden, das mittels eines anderen Gelenks (48; 48A; 48B) mit einer zumindest im Wesentlichen vertikalen und die Drehachse (42a; 42aA; 42aB) der Eingangswelle (42; 42A; 42B) zumindest im Wesentlichen schneidenden geometrischen Achse (48a; 48aA; 48aB) mit dem Rahmen (2; 2A; 2B) verbunden ist;
- ein Steuerungselement (56; 56A; 56B) zwischen dem Tragelement (47; 47A; 47B) und der Deichsel (4; 4A; 4B) verbunden ist.

2. Landwirtschaftliche Erntemaschine nach Anspruch 1, ***dadurch gekennzeichnet*, dass** das Kardangelenk (44; 44A) und das andere Kardangelenk (45; 45A) der Kupplung (43; 43A) eine starre Doppelspannbacke (50; 50A) aufweisen.

3. Landwirtschaftliche Erntemaschine nach Anspruch 2, ***dadurch gekennzeichnet*, dass** die Verbindung zwischen dem Kardangelenk (44A) und der ersten Antriebswelle (28A) eine Verbindung (67) ist, die entlang der Drehachse (28aA) dieser letzteren verschiebbar ist.

4. Landwirtschaftliche Erntemaschine nach Anspruch 2, ***dadurch gekennzeichnet*, dass** die Verbindung zwischen dem anderen Kardangelenk (45) und der Eingangswelle (42) eine Verbindung (54) ist, die entlang der Drehachse (42a) dieser letzteren verschiebbar ist.

5. Landwirtschaftliche Erntemaschine nach Anspruch 2, ***dadurch gekennzeichnet*, dass**
- eine entsprechende Spannbacke (55) des Kardangelenks (44) bezüglich der ersten Antriebswelle (28) feststehend ist;
- die erste Antriebswelle (28) eine Teleskopwelle ist.

6. Landwirtschaftliche Erntemaschine nach Anspruch 1, ***dadurch* *gekennzeichnet,* dass**
- eine entsprechende Spannbacke (55B) des Kardangelenks (44B) bezüglich der ersten Antriebswelle (28B) feststehend ist;
- eine entsprechende Spannbacke (53B) des anderen Kardangelenks (45B) bezüglich der Eingangswelle (42B) feststehend ist;
- das Kardangelenk (44B) und das andere Kardangelenk (45B) bezüglich einander entlang einer die Mitten der beiden Kardangelenke (44B, 45B) durchquerenden geometrischen Achse teleskopisch sind.

7. Landwirtschaftliche Erntemaschine nach irgend einem der Ansprüche 1 bis 6, ***dadurch gekennzeichnet*, dass**
- die erste Antriebswelle (28A) oder eine entsprechende Spannbacke (55A) des Kardangelenks (44A) in dem Tragelement (47A) drehbar geführt werden;
- die geometrische Achse (48aA) des das Tragelement (47A) mit dem Rahmen (2A) verbindenden anderen Gelenks (48A) die die Mitten der beiden Kardangelenke (44A; 45A) durchquerende geometrische Achse zumindest im Wesentlichen auf halbem Wege zwischen den Mitten schneidet, wenn sich die Deichsel (4A) in einer zumindest im Wesentlichen bezüglich des Rahmens (2A) orthogonalen Position befindet.

8. Landwirtschaftliche Erntemaschine nach irgend einem der Ansprüche 1 bis 6, ***dadurch gekennzeichnet*, dass**
- der sich zwischen den beiden Kardangelenken (44, 45; 44B, 45B) befindende Kupplungsteil (43; 43B) in dem Tragelement (47; 47B) drehbar geführt wird;
- die geometrische Achse (48a; 48aB) des das Tragelement (47; 47B) mit dem Rahmen (2; 2B) verbindenden anderen Gelenks (48; 48B) zumindest im Wesentlichen die Mitte des anderen Kardangelenks (45) durchquert.

9. Landwirtschaftliche Erntemaschine nach Anspruch 7 oder 8, ***dadurch* *gekennzeichnet*, dass** sich die geometrische Achse (15a) des ersten Gelenks (15) und die geometrische Achse (48a; 48aA; 48aB) des anderen Gelenks (48; 48A; 48B) zumindest im Wesentlichen in einer vertikalen Ebene (52) erstrecken, die zumindest im Wesentlichen orthogonal zur Arbeitsvorschubrichtung (7) verläuft.

10. Landwirtschaftliche Erntemaschine nach irgend einem der Ansprüche 1 bis 9, ***dadurch gekennzeichnet*, dass** das Steuerungselement (56; 56A; 56B) mit der Deichsel (4; 4A; 4B), dem Rahmen (2; 2A; 2B) und dem Tragelement (47; 47A; 47B) ein verformbares Viereck bildet.

11. Landwirtschaftliche Erntemaschine nach Anspruch 10, ***dadurch gekennzeichnet*, dass** das Viereck zumindest im Wesentlichen ein Parallelogramm ist.

12. Landwirtschaftliche Erntemaschine nach irgend einem der Ansprüche 1 bis 11, ***dadurch gekennzeichnet*, dass** das Steuerungselement (56; 56A; 56B) aus einer Zugstange (59; 59A; 59B) besteht, die zwischen der Deichsel (4; 4A; 4B) und dem Tragelement (47; 47A; 47B) angelenkt ist.

13. Landwirtschaftliche Erntemaschine nach irgend einem der Ansprüche 1 bis *12,* ***dadurch gekennzeichnet*, dass** die geometrische Achse (48a; 48aA; 48aB) des anderen Gelenks (48; 48A; 48B) in Seitenansicht von unten nach oben betrachtet leicht nach vorne geneigt ist.

14. Landwirtschaftliche Erntemaschine nach irgend einem der Ansprüche 1 bis 13, ***dadurch gekennzeichnet*, dass** die geometrische Achse (15a) des ersten Gelenks (15) in Seitenansicht von unten nach oben betrachtet leicht nach hinten geneigt ist.

15. Landwirtschaftliche Erntemaschine nach irgend einem der Ansprüche 1 bis 14, ***dadurch gekennzeichnet*, dass**
- der erste Abschnitt (25; 25A; 25B) der Kraftübertragungselemente (5; 5A; 5B) eine zweite Antriebswelle (29) enthält, die die Bewegung vom vorderen Teil der Deichsel (4; 4A; 4B) zur ersten Antriebswelle (28; 28A; 28B) überträgt;
- die erste Antriebswelle (28; 28A; 28B) und die zweite Antriebswelle (29) mittels einer zweiten Kupplung (37) aneinander gekuppelt sind.

16. Landwirtschaftliche Erntemaschine nach Anspruch 15, ***dadurch gekennzeichnet*, dass** die zweite Kupplung (37) aus einem Kardangelenk (38) besteht.

17. Landwirtschaftliche Erntemaschine nach Anspruch 15 oder 16, ***dadurch gekennzeichnet*, dass** die erste Antriebswelle (28; 28A; 28B) und die zweite Antriebswelle (29) mittels eines einzigen Lagers (39), das sich in der Nähe der zweiten Kupplung (37) erstreckt, durch die Deichsel (4; 4A; 4B) direkt gestützt werden.

18. Landwirtschaftliche Erntemaschine nach Anspruch 17, ***dadurch gekennzeichnet*, dass** das Lager (39) mittels elastischer Stützen (40) mit der Deichsel (4; 4A; 4B) verbunden ist.

19. Landwirtschaftliche Erntemaschine nach Anspruch 17 oder 18, ***dadurch gekennzeichnet*, dass** das Lager (39) an der zweiten Antriebswelle (29) angebracht ist.

20. Landwirtschaftliche Erntemaschine nach irgend einem der Ansprüche 15 bis 19, ***dadurch gekennzeichnet*, dass** die Drehachse (29a) der zweiten Antriebswelle (29) zumindest im Wesentlichen mit der Längsachse (4a; 4aA) der Deichsel (4; 4A; 4B) zusammenfällt.

21. Landwirtschaftliche Erntemaschine nach irgend einem der Ansprüche 1 bis 20, ***dadurch gekennzeichnet*, dass**
- sich die Kupplung (43; 43A; 43B) außerhalb der Deichsel (4; 4A; 4B) erstreckt;
- die erste Antriebswelle (28; 28A; 28B) aus der Deichsel (4; 4A; 4B) herausragt;
- ein Schutz (49) vorgesehen ist, der die Kupplung (43; 43A; 43B) und den Teil der ersten Antriebswelle (28; 28A; 28B), der aus der Deichsel (4; 4A; 4B) herausragt, zumindest im Wesentlichen umhüllt.

22. Landwirtschaftliche Erntemaschine nach irgend einem der Ansprüche 1 bis 21, ***dadurch gekennzeichnet*, dass**
- die Deichsel (4; 4A; 4B) in eine Transportstellung geschwenkt werden kann, in der sie sich zumindest im Wesentlichen parallel zum Rahmen (2; 2A; 2B) erstreckt;
- sich die Drehachse (42a; 42aA; 42aB) der Eingangswelle (42; 42A; 42B) bezüglich des ersten Gelenks (15) auf der gegenüberliegenden Seite zu der erstreckt, auf der sich die Deichsel (4; 4A; 4B) in Transportstellung erstreckt.
